# EUROPEAN PATENT SPECIFICATION

(11) **EP 0 656 577 B1**
(45) Date of publication and mention of the grant of the patent: **27.06.2001**
(21) Application number: 94308819.5
(22) Date of filing: 29.11.1994
(51) Int. Cl.: G06F 1/16

(54) **A computer with increased functionality**
Ein Rechner mit erhöhter Funktionelltätigkeit
Ordinateur avec fonctionnalité accrue

(30) Priority: 03.12.1993 US 160749
(43) Date of publication of application: 07.06.1995
(73) Proprietor: NCR International, Inc., Dayton, Ohio 45479 (US)
(72) Inventor: Heredia, Rafael, Easley, SC 29642 (US); Sodon, Richard E., Piscataway, NJ 08854-5903 (US)
(74) Representative: Cleary, Fidelma

(56) References cited:
- EP-A- 0 047 078
- EP-A- 0 053 061
- US-A- 4 412 300

## Description

The present invention relates to a computer. The invention has particular application to personal computers (PCs) including so called notebook computers.

PCs and particularly smaller so-called notebook computers have come into widespread use during the past few years. Another technological development that has come into increasing recent use is pen computing, in which data can be input into a computer by handwriting by a pen or stylus or a human finger onto a screen or digitizer.

European Patent Application EP-A-0 053 061 discloses a hand-held computer comprising a peripheral frame which contains connections into which removeable cards may be plugged. The computer also contains a flat display screen which is mounted on the frame and topped with a transparent plate which forms a matrix of touch sensitive areas or points. The screen and the plate occupy all of the upper surface of the casing and are electrically connected to the other circuits of the computer by contact with the frame on which they are mounted. As such this document discloses the use of an internal frame to electrically connect components such as cards and the computer display.

It is an object of the present invention to provide a low cost computer which has enhanced capabilities.

According to the present invention there is provided a computer comprising a digitizer which can be engaged by a writing device for inputting data to the computer and having a housing and a circuit board within said housing, characterized by a base unit coupled to said digitizer, said circuit board having a receptacle for receiving a data input control circuit module, said housing having an aperture through which said data input control circuit module can be engaged with said receptacle; and a data input control circuit module which, when engaged with said receptacle of said circuit board, completes a digitizer operating data input circuit enabling data to be input by use of a writing device.

It is an advantage of the present invention to provide a relatively low-cost computer, such as a notebook computer, which performs normal computing functions but does not have a capability for receiving data by a hand-written input, and which can be subsequently be upgraded by purchase of additional components, to achieve such a capability.

Embodiments of the present invention will now be described, by way of example, with reference to the accompanying drawings, in which:
Fig. 1 is a perspective view of a prior art notebook computer having pen input capability, partially broken away to show a permanently installed circuit board for operation of a pen input capability which employs a digitizer which is integrated with the display of the notebook computer;
Fig. 2 is a perspective view showing a notebook computer embodying the present invention, in which an access door in the housing of the computer permits the installation and removal of a pen input upgrade module;
Fig. 3 is an elevation view of the computer of Fig. 2, partially broken away, to show the engagement of the pen upgrade module with a circuit board within the computer; and
Fig. 4 is a perspective view of a second embodiment of the invention, showing a different arrangement for inserting the pen upgrade module into the housing of the computer.

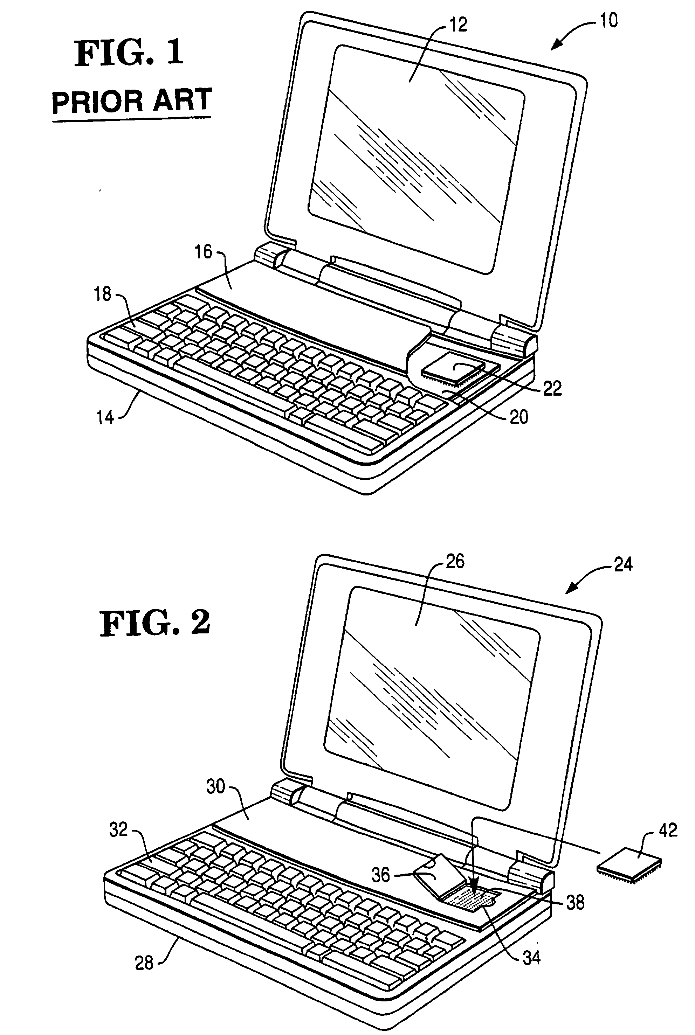

Shown in Fig. 1 is a perspective view of a prior art notebook computer 10, which comprises an integrated digitizer and display 12, a lower housing 14, an upper housing surface 16 and a keyboard 18. Contained within the housing 14 is at least one circuit board 20 on which computer components such as a microprocessor and a memory are mounted. Also mounted on the circuit board 20 is a module 22 which contains the circuitry necessary for operation of the integrated digitizer and display 12 and the receiving, decoding and directing of data input to the digitizer and display 12 by a stylus (not shown) or other suitable device such as a pen or a human finger. Combined digitizer and display devices are known, as described. for example, in United States patent No. 5,195,133, in which one such device is mentioned. It will be seen that in the notebook computer of Fig. 1 the circuit module is included in the notebook computer as originally sold, and is mounted on the circuit board 20 within the housing 14.

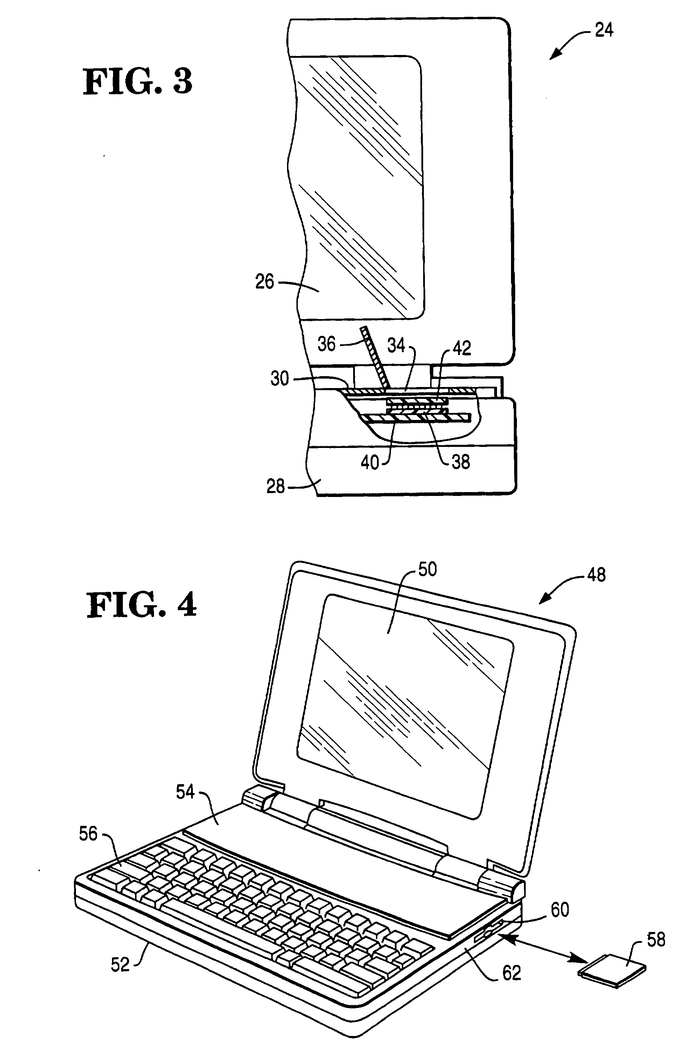

The notebook computer 24 shown in Figs. 2 and 3 is similar to the prior art computer 10 of Fig. 1, in that it includes an integrated digitizer and display 26, a lower housing 28, an upper housing surface 30 and a keyboard 32. What is different, however, is that the upper housing surface contains an aperture 34 which may selectively be closed by a hinged door 36. The aperture is located so as to be positioned above and in registry with a receptacle 38 on a circuit board 40, which may also include necessary components for the computer 24, such as a microprocessor and a memory. The computer 24 of Figs. 2 and 3 also differs from the prior art computer 10 of Fig. 1 in that the computer 24, although including the integrated digitizer and display 26, and certain operating circuitry associated therewith, and otherwise being a fully functional computer, does not include all of the circuitry necessary for pen input capability, and can therefore be sold to a user who does not require such capability for a lower price than the prior art computer of Fig. 1, which includes such capability.

In the event that the purchaser of the computer of Figs. 2 and 3 subsequently determines that pen input capability is required, the purchaser can then purchase an upgrade module 42 and simply add it to the computer 24 by opening the door 36 and placing the upgrade module through the opening 34 into engagement with the receptacle 38 on the circuit board 40. Since, as has been previously described, the computer 24 already includes some of the apparatus necessary to enable the computer 24 to function with pen input capability, such as the integrated digitizer and display 26, the module 42 can be relatively simple in design, if desired. In an extreme case, all that the module would need to contain would be a circuit which would complete an existing pen input control circuit on the circuit board 40. It is probably more likely that a more substantial amount of circuitry would be included in the module, such as a controller chip for the pen input, in order to warrant the cost differential between the fully featured computer of Fig. 1 and the computer of Figs. 2 and 3. Cost and marketing considerations would probably determine what the contents of the module would include. In any event, the module 42 would include whatever circuitry was not included in the computer 24 and was required to implement fully the pen input feature.

Shown in Fig. 4 is another embodiment of the invention. A notebook computer 48 includes an integrated digitizer and display 50, a lower housing 52, an upper housing surface 54 and a keyboard 56. This computer is similar to the computer 24 of Figs. 2 and 3 in that it is sold as a fully functional computer which does not, however, include pen input capability. Such capability can be added by the purchase and installation of an upgrade module 58 which is similar in function and content to the upgrade module 42 of Figs. 2 and 3. In this case, however, the module is inserted into the housing 52 and into engagement with a circuit board within said housing, through a slot 60 in a side surface 62 of the housing 52. Such an arrangement may be advantageous if the notebook computer lacks an upper surface 54 of sufficient size to accommodate the door 36 of the computer of Figs. 2 and 3, or if it is desired to use the upper surface 54 for some other purpose.

## Claims

1. A computer (10) comprising a digitizer (26) which can be engaged by a writing device for inputting data to the computer (10) and having a housing (28,30) and a circuit board (40) within said housing (28,30), characterized by a base unit coupled to said digitizer (26), said circuit board (40) having a receptacle (38) for receiving a data input control circuit module (42), said housing (28,30) having an aperture (34) through which said data input control circuit module (42) can be engaged with said receptacle (38); and a data input control circuit module (42) which, when engaged with said receptacle (38) of said circuit board (40), completes a digitizer operating data input circuit enabling data to be input by use of a writing device.

2. A computer (10) according to claim 1, housing a cover (36) for said aperture (34) in said housing (28,30), said cover (36) being movable to uncover said aperture (34) for insertion or removal of said data input control circuit module (42).

3. A computer (10) according to claim 1 or claim 2, wherein said aperture (34) comprises a slot (60) in a side surface (62) of said housing (28,30).

4. A computer according to any one of the preceding claims, wherein said computer (10) is a notebook computer.

5. A computer according to any one of the preceding claims, wherein said writing device is a stylus.

6. An upgrade data input control module (42) that can be placed into engagement with the data input control module receptacle of a computer according to one of the preceding claims, comprising circuitry means for completing a digitizer operating data input circuit enabling data to be input into the computer by use of a writing device.

## Patentansprüche

1. Computer (10) mit einem Digitalisierer (26), der mit einem Schreibegerät zur Eingabe von Daten in den Computer (10) berührt werden kann, und mit einem Gehäuse (28,30) und einer in dem Gehäuse befindlichen Schaltungskarte (40), **dadurch gekennzeichnet**, daß mit dem Digitalisierer (26) eine Basiseinheit gekoppelt ist, daß die Schaltungskarte (40) eine Aufnahme (38) für ein Dateneingabe-Steuerschaltungsmodul (42) hat, daß das Gehäuse (28,30) eine Öffnung (34) aufweist, durch welche das Dateneingabe-Steuerschaltungsmodul (42) in die Aufnahme (38) eingeführt werden kann, und daß ein Dateneingabe-Steuerschaltungsmodul (42) vorgesehen ist, das bei Einführung in die Aufnahme (38) der Schaltungskarte (40) einen Digitalisierer vervollständigt, welcher die Dateneingabeschaltung so arbeiten läßt, daß Daten durch Verwendung eines Schreibgerätes eingegeben werden können.

2. Computer (10) nach Anspruch 1, mit einer Abdeckung (36) für die Öffnung (34) im Gehäuse (28,30), wobei die Abdeckung (36) bewegbar ist zur Freigabe der Öffnung (34) zum Einsetzen oder Herausnehmen des Dateneingabe-Steuerschaltungsmoduls (42).

3. Computer (10) nach Anspruch 1 oder 2, bei welchem die Öffnung (34) einen Schlitz (60) in einer Seitenfläche (62) des Gehäuses (28,30) bildet.

4. Computer nach einem der vorstehenden Ansprüche, bei welchem der Computer (10) ein Notebook-Computer ist.

5. Computer nach einem der vorstehenden Ansprüche, bei welchem das Schreibgerät ein Stift ist.

6. Aufrüst-Dateneingabe-Steuermodul (42), das in eine Dateneingabe-Steuermodulaufnahme eines Computers nach einem der vorstehenden Ansprüche eingesetzt werden kann, mit einer Schaltung zur Vervollständigung eines Digitalisierers, der eine Dateneingabeschaltung so arbeiten läßt, daß in den Computer unter Verwendung eines Schreibgerätes Daten eingegeben werden können.

## Revendications

1. Ordinateur (10) comportant un dispositif (26) numériseur qui peut coopérer avec un dispositif d'écriture pour entrer des données dans l'ordinateur (10), et comportant un boîtier (28, 30) et un panneau (40) de circuit à l'intérieur du boîtier (28, 30), caractérisé par une unité de base couplée au numériseur (26), le panneau (40) de circuit comportant un réceptacle (38) pour recevoir un module (42) de circuit de commande d'entrée de données, le boîtier (28, 30) ayant une ouverture (34) par laquelle le module (42) de circuit de commande d'entrée de données peut coopérer avec le réceptacle (38) ; et un module (42) de circuit de commande d'entrée de données qui, lorsqu'il coopère avec le réceptacle (38) du panneau (40) de circuit, forme de manière complète un circuit d'entrée de données de fonctionnement de numériseur permettant à des données d'être entrées par l'utilisation d'un dispositif d'écriture.

2. Ordinateur (10) suivant la revendication 1, logeant un capot (36) pour l'ouverture (34) dans le boîtier (28, 30), le capot (36) étant mobile pour découvrir l'ouverture (34) pour l'insertion ou le retrait du module (42) de circuit de commande d'entrée de données.

3. Ordinateur (10) suivant la revendication 1 ou 2, dans lequel l'ouverture (34) comporte une fente (60) dans une surface (62) latérale du boîtier (28, 30).

4. Ordinateur suivant l'une quelconque des revendications précédentes, dans lequel l'ordinateur (10) est un ordinateur bloc-notes.

5. Ordinateur suivant l'une quelconque des revendications précédentes, dans lequel le dispositif d'écriture est un stylet.

6. Module (42) de commande d'entrée de données de montée en gamme qui peut être placé en coopération avec le réceptacle de module de commande d'entrée de données d'un ordinateur suivant l'une des revendications précédentes, comportant des moyens formant circuit pour réaliser de manière complète un circuit d'entrée de données de fonctionnement de numériseur permettant à des données d'être entrées dans l'ordinateur par l'utilisation d'un dispositif d'écriture.
